# FASCICULE DE BREVET EUROPEEN

(11) **EP 2 315 377 B1**
(45) Date de publication et mention de la délivrance du brevet: **29.08.2012**
(21) Numéro de dépôt: 10187195.2
(22) Date de dépôt: 12.10.2010
(51) Int. Cl.: H04B 17/00

(54) **PROCÉDÉ ET DISPOSITIF D'AIDE AU POSITIONNEMENT D'AU MOINS UNE ANTENNE**
HILFSVERFAHREN ZUR POSITIONIERUNG MINDESTENS EINER ANTENNE
METHOD AND DEVICE FOR POSITIONING AT LEAST ONE ANTENNA

(30) Priorité: 20.10.2009 FR 0957333
(43) Date de publication de la demande: 27.04.2011
(73) Titulaire: Mentum, 78140 Velizy Villacoublay (FR)
(72) Inventeur: De Grammont, Arnaud, 78350, Jouy-en-Josas (FR)
(74) Mandataire: Delumeau, François Guy

(56) Documents cités:
- EP-A1- 1 283 643
- EP-A1- 1 292 163
- EP-A1- 1 363 405
- DE-A1- 19 512 296
- US-A- 5 949 988

## Description

La présente invention se situe dans le domaine des réseaux radiofréquence.

Elle vise plus particulièrement un procédé et un dispositif d'aide au positionnement d'antennes.

Dans le domaine de l'ingénierie des liens micro-ondes, une problématique forte est en effet de positionner précisément les antennes en émission et en réception de façon à assurer une propagation du signal peu perturbée par les obstacles.

Dans l'état actuel de la technique, les installateurs utilisent des outils de simulation associés à des bases de données de terrain (relief, position des bâtiments, ...), dans lesquelles sont enregistrées pour chaque position géographique, l'altitude du terrain et éventuellement la hauteur des obstacles susceptibles de gêner la propagation du signal.

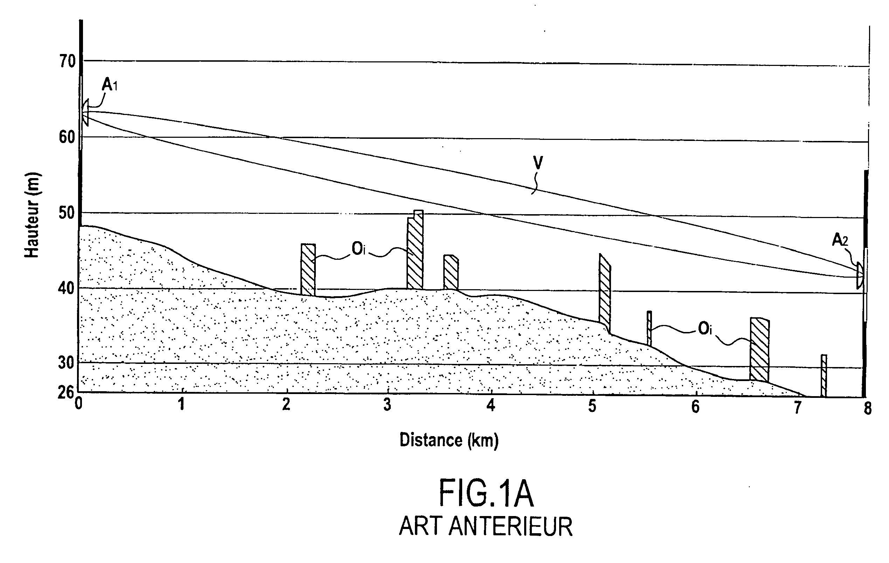

La figure 1A représente schématiquement l'interface homme-machine d'un outil d'aide au positionnement d'antennes de l'état actuel de la technique. Sur cette figure, on a représenté deux antennes A₁, A₂, et un ellipsoïde de Fresnel V modélisant la propagation directe d'un signal radiofréquence entre ces deux antennes.

Dans les bandes de fréquences utilisées typiquement entre quelques dizaines de MHz et quelques dizaines de GHZ, il est en effet connu d'évaluer l'atténuation apportée par les obstacles en utilisant des ellipsoïdes de Fresnel.

Comme représenté sur cette figure, un tel outil représente les obstacles Oᵢ et l'ellipsoïde de Fresnel V dans la coupe du terrain définie par le plan vertical passant par les antennes A₁, A_{2.}

Cet outil offre aussi à l'installateur la possibilité de varier la position verticale des antennes pour apprécier l'effet sur la pénétration des obstacles dans l'ellipsoïde.

Mais les outils du type de celui de la figure 1A ne permettent pas de représenter la perturbation du signal induite par les obstacles se trouvant de part en d'autre du plan vertical défini par les antennes.

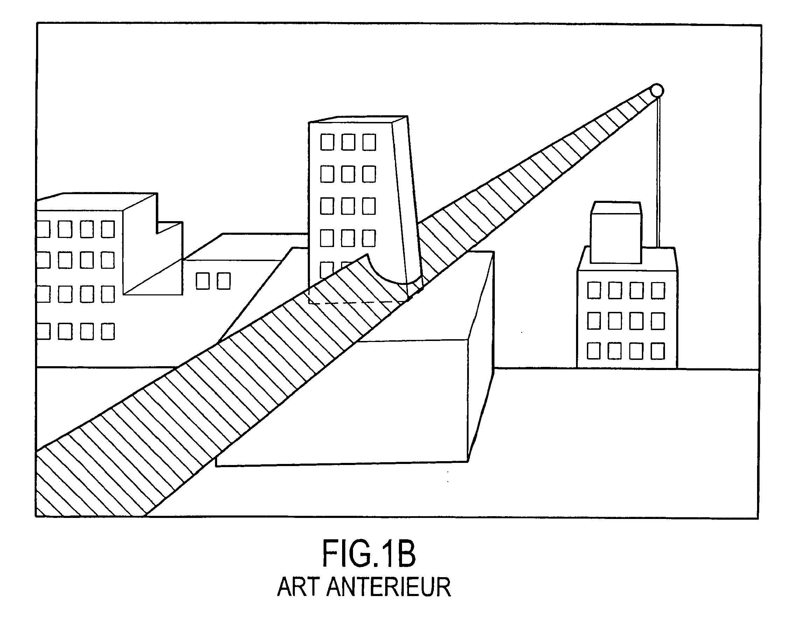

On connaît aussi des outils de simulation présentant une vue tridimensionnelle (3D) d'un signal de propageant entre deux antennes. A titre d'exemple, la figure 1B représente la moitié inférieure d'un ellipsoïde de Fresnel modélisant un tel signal.

Malheureusement, dans ce type d'outils, le masquage des obstacles oblige l'utilisateur à changer l'angle de vue et à naviguer dans la scène 3D pour visualiser l'ensemble des obstacles. Ces outils ne permettent donc pas d'apprécier rapidement et de façon synthétique l'effet du déplacement des antennes.

### Objet et résumé de l'invention

L'invention propose un procédé et un dispositif d'aide au positionnement d'antennes qui ne présente pas les inconvénients des outils de l'art antérieur.

Plus précisément, l'invention concerne un procédé d'aide au positionnement d'au moins une antenne choisie parmi une antenne d'émission d'un signal radiofréquence et une antenne de réception de ce signal. Ce procédé comporte :
- une étape de définition d'un repère de deux axes définissant un plan non vertical, l'échelle d'un premier axe étant définie en fonction de la distance entre les antennes, l'échelle du deuxième axe étant définie en fonction de la longueur d'onde du signal ;
- une étape de modélisation du signal en au moins un volume de modélisation ;
- une étape de calcul d'un volume d'intersection entre ce volume de modélisation et au moins un objet ;
- une étape d'obtention d'une surface par projection du volume d'intersection dans le plan précité ;
- une étape de représentation de cette surface dans le repère précité en utilisant une convention associée à ce volume de modélisation ; et
- une étape de qualification du positionnement d'au moins une antenne en fonction de cette surface.

Corrélativement, l'invention concerne aussi un dispositif d'aide au positionnement d'au moins une antenne choisie parmi une antenne d'émission d'un signal radiofréquence et une antenne de réception de ce signal. Ce dispositif comporte :
- des moyens de définition d'un repère de deux axes définissant un plan non vertical, l'échelle d'un premier axe étant définie en fonction de la distance entre les antennes, l'échelle du deuxième axe étant définie en fonction de la longueur d'onde du signal ;

- des moyens de modélisation du signal en au moins un volume de modélisation ;
- des moyens de calcul d'un volume d'intersection entre ce volume de modélisation et au moins un objet ;
- des moyens d'obtention d'une surface par projection du volume d'intersection dans le plan précité ;
- des moyens de représentation de cette surface dans le repère précité en utilisant une convention associée à ce volume de modélisation sur un écran du dispositif ; et
- des moyens de qualification du positionnement d'au moins une antenne en fonction de cette surface.

De façon avantageuse, les échelles du premier et du deuxième axe peuvent être choisies pour permettre la représentation des deux antennes et de tout le volume de simulation dans une fenêtre d'un écran d'ordinateur. Cette représentation permet de représenter de façon synthétique, en une seule fois, les effets de tous les obstacles sur la propagation du signal radiofréquence.

On notera que cette représentation n'est pas naturelle car elle entraîne une distorsion de la représentation des obstacles.

Dans un mode particulier de réalisation, l'invention permet la simulation du déplacement d'au moins une antenne, et la mise à jour automatique, en fonction de ce déplacement, des volumes de modélisation, des volumes d'intersection et des surfaces dans le plan de projection. L'invention permet ainsi de déterminer très simplement l'impact du déplacement d'une antenne ou des deux antennes sur la propagation du signal.

Dans un mode préféré de réalisation, la simulation du déplacement des antennes met en oeuvre un algorithme d'optimisation qui introduit un critère supplémentaire pour minimiser la hauteur d'installation des antennes sur leurs pylônes, en prenant par exemple comme critère la somme des carrés des hauteurs.

On peut par exemple utiliser un algorithme du type recuit-simulé connu de l'homme du métier et décrit notamment dans le document « Aaarts, F.H.L, and v. Laarhoven (1985), Statistical Cooling : A general approach to combinatorial optimization problems, Philips J. Res., 40(4), 193-226 ».

Préférentiellement, le plan dans lequel on effectue la projection est horizontal. On élimine ainsi les effets de masquage entre les obstacles, ce qui permet de faire une analyse complète des obstructions en se ramenant à une problématique à deux dimensions.

Dans un mode particulier de réalisation, on utilise plusieurs volumes de modélisation constitués par des ellipsoïdes de Fresnel de différents niveaux. Un choix judicieux des conventions associées à ces ellipsoïdes permet une représentation très fine de l'effet des obstacles sur la propagation du signal.

Dans un mode particulier de réalisation, le procédé d'aide au positionnement selon l'invention comporte aussi :
- une étape de calcul d'un segment d'intersection d'un axe de propagation du signal avec chacun des objets ; et
- une étape de représentation de la projection de ce segment dans le plan précité avec une convention associée à cet axe.

Dans un mode particulier de réalisation, les différentes étapes du procédé d'aide au positionnement sont déterminées par des instructions de programme d'ordinateur.

En conséquence, l'invention vise aussi un programme d'ordinateur sur un support d'informations, ce programme étant susceptible d'être mis en oeuvre dans un ordinateur, ce programme comportant des instructions adaptées à la mise en oeuvre des étapes du procédé d'aide au positionnement d'antennes tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- les figures 1A et 1B, déjà décrites, représentent des outils d'aide à l'installation d'antennes connus de l'art antérieur ;
- la figure 2 représente, de façon schématique, l'architecture d'un dispositif d'aide au positionnement d'antennes conforme à un mode de réalisation de l'invention ;
- la figure 3 représente l'interface homme-machine du dispositif de la figure 2 ;
- la figure 4 représente, sous forme d'organigramme, les principales étapes d'un procédé d'aide à l'installation d'antennes conforme à un mode de réalisation de l'invention ; et
- la figure 5 représente des volumes pouvant être utilisés dans un procédé ou de dispositif d'aide à l'installation d'antennes conforme à un mode de réalisation de l'invention.

### Description détaillée d'un mode de réalisation

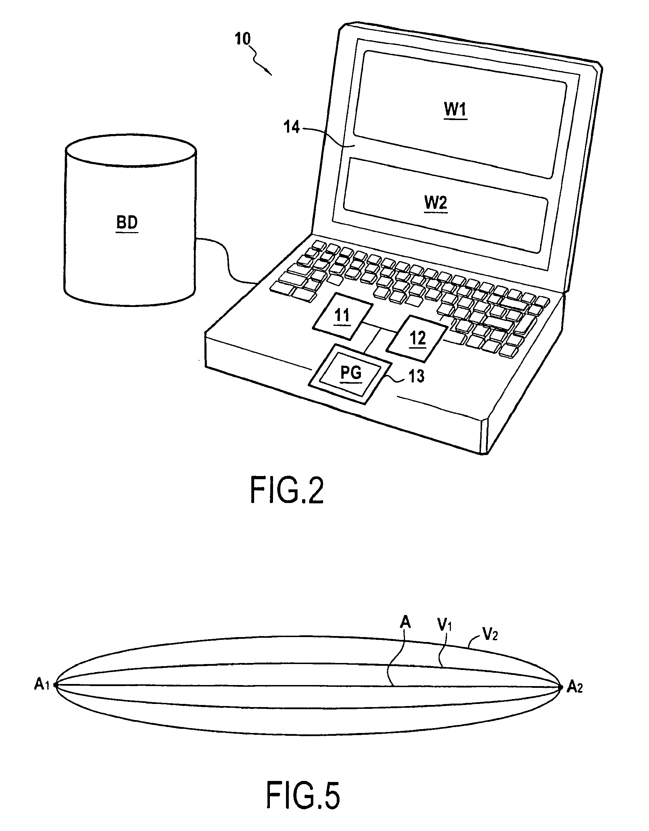

La figure 2 représente de façon schématique, l'architecture d'un dispositif 10 d'aide au positionnement d'antennes conforme à l'invention.

Dans l'exemple de réalisation décrit ici, le dispositif 10 a l'architecture matérielle d'un ordinateur.

Il comporte notamment un processeur 11, une mémoire vive de type RAM 12 et une mémoire morte de type ROM 13.

Cette mémoire morte de type ROM 13 constitue un support d'informations conforme à l'invention sur lequel est enregistré un programmeur d'ordinateur PG conforme à l'invention.

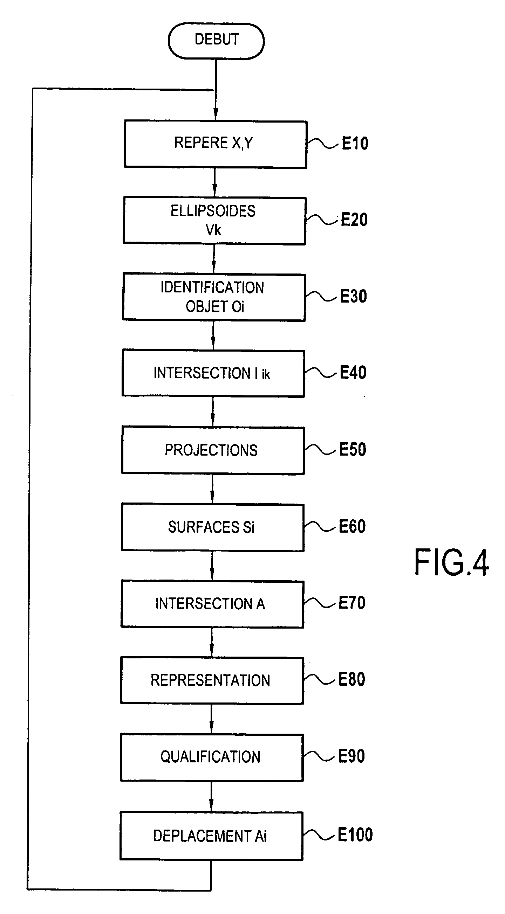

Ce programme d'ordinateur PG comporte des instructions pour exécuter un procédé d'aide au positionnement d'antennes conforme à l'invention dont les principales étapes sont représentées sous forme d'organigramme à la figure 4.

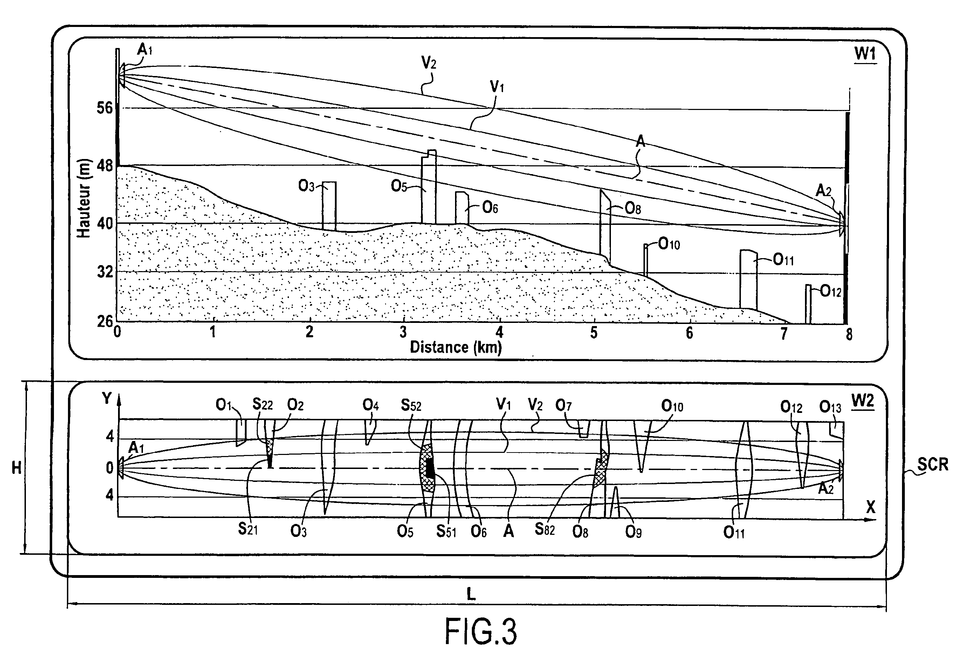

Dans l'exemple de réalisation décrit ici, l'ordinateur 10 comporte un écran 14 sur lequel sont affichées deux fenêtres W1, W2 représentées à la figure 3.

Le contenu de la fenêtre W1 correspond, dans cet exemple de réalisation, à l'art antérieur décrit précédemment en référence à la figure 1A.

La figure W2 illustre l'intérêt de l'invention.

Dans le mode de réalisation décrit ici, le dispositif 10 comporte des moyens pour accéder à une base de données BD dans laquelle sont mémorisées des coordonnées d'objets.

Dans l'exemple de réalisation décrit ici, les objets sont représentés dans un repère, par exemple par leurs coordonnées longitude, latitude, sur la surface du globe. On peut aussi utiliser un système de projection, fonction de la scène étudiée sur le globe afin de se ramener à une représentation sur un plan.

En France, par exemple le système Lambert II est le système de projection souvent utilisé par l'IGN (Institut Géographique Nationale). Ce système de projection permet de conserver au mieux les distances et les angles dans la zone d'application.

On obtient ainsi des coordonnées X, Y exprimées en mètre dans un repère de référence lié au système de projection.

Dans l'exemple de réalisation décrit ici, la base de données BD comporte aussi les coordonnées des antennes.

En référence à la figure 4, nous allons maintenant décrire un procédé d'aide au positionnement d'antennes conforme à un mode particulier de réalisation de l'invention permettant d'obtenir la représentation du signal radiofréquence affichée dans la fenêtre W2.

Conformément à l'invention, le procédé d'aide de positionnement d'antennes comporte une étape E10 de définition d'un repère de deux axes X, Y définissant un plan non vertical.

Dans l'exemple de réalisation décrit ici, le plan (X, Y) est un plan horizontal.

Dans l'exemple de réalisation décrit ici, pour définir l'axe X de ce repère :
- on ramène, par translation, l'origine du repère de référence au niveau de la première antenne A₁ ; et
- par une rotation, on ramène la deuxième antenne A₂ de façon à ce que la droite (A₁ A₂) soit confondue avec l'axe X des abscisses.

L'échelle de cet axe X est choisie de façon à ce que le segment [A₁, A₂] occupe la largeur L de la fenêtre W2.

L'axe Y des ordonnées est choisi orthogonal à l'axe X des abscisses.

Conformément à l'invention, on modélise ensuite, au cours d'une étape E20, le signal se propageant entre les antennes A₁ et A₂ par au moins un volume de modélisation.

Dans l'exemple de réalisation décrit ici, on modélise le signal par une pluralité d'ellipsoïdes de Fresnel Vᵢ telle que représentées à la figure 5.

On rappelle qu'un ellipsoïde de Fresnel est défini par l'ensemble des points M tels que A₁M+A₂M = A₁A₂ + kλ/2 où λ est la longueur d'onde du signal concerné et k le niveau de cet ellipsoïde.

Dans le mode de réalisation décrit ici, on identifie, au cours d'une étape E30, les objets Oᵢ de la base de données BD qui obstruent au moins un des ellipsoïdes Vₖ.

Puis, au cours d'une étape E40, on calcule le volume d'intersection lᵢₖ entre chacune des ellipsoïdes Vₖ et chacun des objets Oᵢ.

Bien entendu, cette intersection peut être vide.

Au cours d'une étape E50, on projette, dans le repère XY, selon la verticale, les volumes d'intersection Iᵢₖ afin d'obtenir une surface Sᵢₖ.

Dans le mode de réalisation décrit ici, l'échelle de l'axe Y est choisie de façon à pouvoir représenter un ellipsoïde de Fresnel de niveau 2, dans la hauteur H de la fenêtre W2.

Il est fondamental de constater que la fenêtre W2 permet de déterminer des obstructions qui ne sont pas visibles sur la fenêtre W1, notamment celle dûe à l'objet O₂.

Plus précisément, les surfaces S₂₁ et S₂₂ renseignent l'installateur sur le fait que l'objet O₂ présente des intersections avec les ellipsoïdes de Fresnel de niveaux 1 et 2.

Puis, au cours d'une étape E60, on représente, dans le repère XY, les surfaces Sᵢₖ avec une convention Cₖ choisie en fonction du niveau K de l'ellipsoïde de Fresnel Vₖ.

Plus précisément, dans l'exemple de réalisation décrit ici, on représente en noir les obstructions des objets Oᵢ avec l'ellipse de Fresnel de niveau 1 (k=1) et en hachures quadrillées, les obstructions des objets Vᵢ avec l'ellipsoïde de Fresnel V₂ de niveau 2.

L'homme du métier comprendra que les surfaces en noir sont très préjudiciables à la propagation du signal alors que les surfaces en hachures quadrillées le sont beaucoup moins.

Dans le mode de réalisation décrit ici, on calcule, au cours d'une étape E70, l'intersection de l'axe A de propagation du signal avec chacun des objets Oᵢ et, on représente, au cours d'une étape E80, la projection de ce segment dans le plan XY avec un code propre à l'axe A.

Conformément à l'invention, il est possible de qualifier le positionnement des antennes Aᵢ A₂, en analysant les surfaces Sᵢₖ et éventuellement la projection des segments d'intersection avec l'axe A.

Dans un mode particulier de l'invention, la fenêtre W2 comporte un message invitant l'utilisateur à déplacer au moins une antenne lorsqu'au moins une surface noire (Sᵢₗ) représentative d'une obstruction de l'ellipsoïde de Fresnel de niveau 1 est représentée dans la fenêtre W2.

Dans un autre mode de réalisation, on peut aussi présenter un message à l'utilisateur lui indiquant que les antennes sont parfaitement positionnées lorsqu'il n'existe aucune représentation d'une surface Sᵢ₂ (obstruction par un ellipsoïde de Fresnel de niveau 2) dans la scène.

Dans un mode préféré de réalisation, la légende des conventions utilisées pour la représentation des surfaces est suffisante pour permettre à l'utilisateur d'apprécier la qualité du signal transmis entre les deux antennes.

Dans l'exemple de réalisation décrit ici, il est possible de simuler le déplacement vertical des antennes A₁ et/ou A₂ en faisant glisser les points A₁ et/ou A₂ verticalement dans la fenêtre W1.

Le contenu des fenêtres W1 et W2 est alors automatiquement mis à jour de sorte qu'il est excessivement aisé, pour l'installateur d'antennes, de déterminer une position d'antenne A₁, A₂ définissant un chemin de propagation de bonne qualité.

En variante, l'altitude des antennes peut être saisie dans un champ de la fenêtre W2, la fenêtre W1 n'étant pas indispensable au procédé de positionnement d'antennes selon l'invention.

Dans l'exemple de réalisation décrit ici, il est également possible de simuler le déplacement horizontal les antennes A₁ et/ou A₂ en les faisant glisser verticalement dans la fenêtre W2, et d'observer l'effet de ce déplacement sur la propagation du signal.

## Revendications

1. Procédé d'aide au positionnement d'au moins une antenne choisie parmi une antenne (A₁) d'émission d'un signal radiofréquence et une antenne (A₂) de réception de ce signal, ce procédé comportant :
- une étape (E10) de définition d'un repère de deux axes définissant un plan non vertical, l'échelle d'un premier axe (X) étant définie en fonction de la distance entre les antennes (A₁, A₂), l'échelle du deuxième axe (Y) étant définie en fonction de la longueur d'onde (λ) du signal ;
- une étape (E20) de modélisation du signal en au moins un volume de modélisation (Vₖ) ;
- une étape (E40) de calcul d'un volume d'intersection (Iᵢₖ) entre ledit volume de modélisation (Vₖ) et au moins un objet (Oᵢ) ;
- une étape (E50) d'obtention d'une surface (Sᵢₖ) par projection dudit volume d'intersection (Iᵢₖ) dans ledit plan;
- une étape (E60) de représentation de ladite surface (Sᵢₖ) dans ledit repère en utilisant une convention (cₖ) associée audit volume de modélisation (Vₖ) ; et
- une étape (E90) de qualification du positionnement d'au moins une desdites antennes (A₁, A₂) en fonction de ladite surface (Sᵢₖ).

2. Procédé d'aide au positionnement d'antennes selon la revendication 1, dans lequel ledit volume de modélisation (Vₖ) est un ellipsoïde de Fresnel.

3. Procédé d'aide au positionnement d'antennes selon la revendication 1 ou 2, dans lequel ledit plan (X, Y) est horizontal.

4. Procédé d'aide au positionnement d'antennes selon l'une quelconque des revendications 1 à 3, comportant :
- une étape (E70) de calcul d'un segment d'intersection d'un axe (A) de propagation dudit signal avec ledit au moins un objet (Oᵢ) ; et
- une étape (E80) de représentation de la projection dudit segment dans ledit plan avec une convention associée audit axe (A).

5. Procédé d'aide au positionnement d'antennes selon l'une quelconque des revendications 1 à 4, comportant une étape (E100) de simulation du déplacement d'au moins une desdites antennes (A₁, A₂).

6. Procédé d'aide au positionnement d'antennes selon la revendication 5 **caractérisé en ce qu'**il comporte une étape (E100) d'optimisation de la position des antennes pour minimiser leur hauteur d'installation.

7. Dispositif (10) d'aide au positionnement d'au moins une antenne choisie parmi une antenne (A₁) d'émission d'un signal radiofréquence et une antenne (A₂) de réception de ce signal, ce dispositif (10) comportant :
- des moyens (PG) de définition d'un repère de deux axes définissant un plan (X, Y) non vertical, l'échelle d'un premier axe (X) étant définie en fonction de la distance entre les antennes (A₁, A₂), l'échelle du deuxième axe (Y) étant définie en fonction de la longueur d'onde (λ) du signal ;
- des moyens (PG) de modélisation du signal en au moins un volume de modélisation (Vₖ) ;
- des moyens (PG) de calcul d'un volume d'intersection (Iᵢₖ) entre ledit volume de modélisation (Vₖ) et au moins un objet (Oᵢ) ;
- des moyens (PG) d'obtention d'une surface (Sᵢₖ) par projection dudit volume d'intersection (Iᵢₖ) dans ledit plan (X, Y) ;
- des moyens (PG) de représentation de ladite surface (Sᵢₖ) dans ledit repère avec une convention associée audit volume de modélisation (Vₖ) sur un écran (SCR) dudit dispositif (10) ; et
- des moyens (PG) de qualification du positionnement d'au moins une desdites antennes (A₁, A₂) en fonction de ladite surface (Sᵢₖ).

8. Programme d'ordinateur (PG) comportant des instructions pour l'exécution du procédé d'aide au positionnement selon l'une quelconque des revendications 1 à 6.

9. Support d'enregistrement lisible par un ordinateur sur lequel est enregistré un programme d'ordinateur (PG) comprenant des instructions pour l'exécution des étapes du procédé d'aide au positionnement selon l'une quelconque des revendications 1 à 6.

## Claims

1. A method for assisting with positioning of at least one antenna selected from an antenna (A₁) for emitting a radio frequency signal and an antenna (A₂) for receiving this signal, this method including:
- a step (E10) for defining a reference system with two axes defining a non-vertical plane, the scale of a first axis (X) being defined according to the distance between the antennas (A₁, A₂), the scale of the second axis (Y) being defined according to the wavelength (λ) of the signal;
- a step (E20) for modeling the signal in at least one modeling volume (Vₖ);
- a step (E40) for calculating an intersection volume (Iₖ) between said modeling volume (Vₖ) and at least one object (Oᵢ) ;
- a step (E50) for obtaining a surface (Sᵢₖ) by projection of said intersection volume (Iᵢₖ) in said plane;
- a step (E60) for representing said surface (Sᵢₖ) in said reference system by using a convention (cₖ) associated with said modeling volume (Vₖ); and
- a step (E90) for qualifying the positioning of at least one of said antennas (A₁, A₂) according to said surface (Sᵢₖ).

2. The method for assisting with positioning of antennas according to claim 1, wherein said modeling volume (Vₖ) is a Fresnel ellipsoid.

3. The method for assisting with positioning of antennas according to claim 1 or 2, wherein said plane (X, Y) is horizontal.

4. The method for assisting with positioning of antennas according to any of claims 1 to 3, including:
- a step (E70) for calculating a segment of intersection of a propagation axis (A) of said signal with said at least one object (Oᵢ); and
- a step (E80) for representing the projection of said segment in said plane with a convention associated with said axis (A).

5. The method for assisting with positioning of antennas according to any of claims 1 to 4, including a step (E100) for simulating the displacement of at least one of said antennas (A₁, A₂).

6. The method for assisting with positioning of antennas according to claim 5, **characterized in that** it includes a step (E100) for optimizing the position of the antennas in order to minimize their installation height.

7. A device (10) for assisting with positioning of at least one antenna selected from an antenna (A₁) for emitting a radio frequency signal and an antenna (A₂) for receiving this signal, this device (10), including:
- means (PG) for defining a reference system with two axes defining a non-vertical plane (X, Y), the scale of a first axis (X) being defined according to the distance between the antennas (A₁, A₂), the scale of the second axis (Y) being defined according to the wavelength (λ) of the signal;
- means (PG) for modeling the signal in at least one modeling volume (Vₖ);
- means (PG) for calculating an intersection volume (Iₖ) between said modeling volume (Vₖ), and at least one object (Oᵢ);
- means (PG) for obtaining a surface (Sᵢₖ) by projection of said intersection volume (Iᵢₖ) in said plane (X,Y);
- means (PG) for representing said surface (Sᵢₖ) in said reference system by using a convention (cₖ) associated with said modeling volume (Vₖ) on a screen (SCR) of said device (10); and
- means (PG)) for qualifying the positioning of at least one of said antennas (A₁, A₂) according to said surface (Sᵢₖ).

8. A computer program (PG) including instructions for executing the positioning method according to any of claims 1 to 6.

9. A recording medium legible by a computer on which is recorded a computer program (PG) comprising instructions for executing the steps of the positioning method according to any of claims 1 to 6.

## Patentansprüche

1. Verfahren zur Unterstützung bei der Positionierung wenigstens einer Antenne, ausgewählt aus einer Antenne (A₁) zum Senden eines Funkfrequenzsignals und einer Antenne (A₂) zum Empfangen dieses Signals, wobei dieses Verfahren umfaßt:
- einen Schritt (E10) zum Definieren eines zweiachsigen Koordinatensystems, das eine nichtvertikale Ebene definiert, wobei die Skalierung einer ersten Achse (X) in Abhängigkeit des Abstandes zwischen den Antennen (A₁, A₂) definiert ist, wobei die Skalierung der zweiten Achse (Y) in Abhängigkeit der Wellenlänge (λ) des Signals definiert ist,
- einen Schritt (E20) zum Modellieren des Signals als wenigstens ein Modellierungsvolumen (Vₖ),
- einen Schritt (E40) zum Berechnen eines Schnittvolumens (Iᵢₖ) zwischen dem Modellierungsvolumen (Vₖ) und wenigstens einem Objekt (Oᵢ),
- einen Schritt (E50) zum Erhalten einer Fläche (Sᵢₖ) durch Projektion des Schnittvolumens (Iᵢₖ) in der genannten Ebene,
- einen Schritt (E60) zum Darstellen der Fläche (Sᵢₖ) in dem Koordinatensystem unter Verwendung einer dem Modellierungsvolumen (Vₖ) zugeordneten Konvention (cₖ), sowie
- einen Schritt (E90) zum Qualifizieren der Positionierung von wenigstens einer der Antennen (A₁, A₂) in Abhängigkeit der Fläche (Sᵢₖ).

2. Verfahren zur Unterstützung bei der Positionierung von Antennen, nach Anspruch 1, wobei das Modellierungsvolumen (Vₖ) ein Fresnel-Ellipsoid ist.

3. Verfahren zur Unterstützung bei der Positionierung von Antennen, nach Anspruch 1 oder 2, wobei die Ebene (X, Y) horizontal ist.

4. Verfahren zur Unterstützung bei der Positionierung von Antennen, nach einem der Ansprüche 1 bis 3, umfassend:
- einen Schritt (E70) zum Berechnen eines Schnittsegments einer Achse (A) der Ausbreitung des Signals mit dem wenigstens einen Objekt (Oᵢ) und
- einen Schritt (E80) zum Darstellen der Projektion des Segments in der Ebene mit einer der Achse (A) zugeordneten Konvention.

5. Verfahren zur Unterstützung bei der Positionierung von Antennen, nach einem der Ansprüche 1 bis 4, umfassend einen Schritt (E100) zum Simulieren der Bewegung von wenigstens einer der Antennen (A₁, A₂).

6. Verfahren zur Unterstützung bei der Positionierung von Antennen, nach Anspruch 5, **dadurch gekennzeichnet, daß** es einen Schritt (E100) zum Optimieren der Position der Antennen umfaßt, um deren Installationshöhe zu minimieren.

7. Vorrichtung (10) zur Unterstützung bei der Positionierung wenigstens einer Antenne, ausgewählt aus einer Antenne (A₁) zum Senden eines Funkfrequenzsignals und einer Antenne (A₂) zum Empfangen dieses Signals, wobei diese Vorrichtung (10) umfaßt:
- Mittel (PG) zum Definieren eines zweiachsigen Koordinatensystems, das eine nichtvertikale Ebene (X, Y) definiert, wobei die Skalierung einer ersten Achse (X) in Abhängigkeit des Abstandes zwischen den Antennen (A₁, A₂) definiert ist, wobei die Skalierung der zweiten Achse (Y) in Abhängigkeit der Wellenlänge (λ) des Signals definiert ist,
- Mittel (PG) zum Modellieren des Signals als wenigstens ein Modellierungsvolumen (Vₖ),
- Mittel (PG) zum Berechnen eines Schnittvolumens (Iᵢₖ) zwischen dem Modellierungsvolumen (Vₖ) und wenigstens einem Objekt (Oᵢ),
- Mittel (PG) zum Erhalten einer Fläche (Sᵢₖ) durch Projektion des Schnittvolumens (Iᵢₖ) in der Ebene (X, Y),
- Mittel (PG) zum Darstellen der Fläche (Sᵢₖ) in dem Koordinatensystem mit einer dem Modellierungsvolumen (Vₖ) zugeordneten Konvention, auf einem Bildschirm (SCR) der Vorrichtung (10), sowie
- Mittel (PG) zum Qualifiizieren der Positionierung von wenigstens einer der Antennen (A₁, A₂) in Abhängigkeit der Fläche (Sᵢₖ).

8. Computerprogramm (PG), das Befehle für die Durchführung des Verfahrens zur Unterstützung bei der Positionierung nach einem der Ansprüche 1 bis 6 umfaßt.

9. Aufzeichnungsträger, der mittels eines Computers lesbar ist und auf dem ein Computerprogramm (PG) gespeichert ist, das Befehle für die Durchführung der Schritte des Verfahrens zur Unterstützung bei der Positionierung nach einem der Ansprüche 1 bis 6 umfaßt.
